# EUROPÄISCHE PATENTSCHRIFT

(11) **EP 0 597 983 B1**
(45) Veröffentlichungstag und Bekanntmachung des Hinweises auf die Patenterteilung: **13.11.1996**
(21) Anmeldenummer: 92917056.1
(22) Anmeldetag: 05.08.1992
(51) Int. Cl.: B01F 3/04, C04B 38/10

(54) **VERFAHREN UND VORRICHTUNG ZUR SCHAUMERZEUGUNG**
FOAM-GENERATING PROCESS AND DEVICE
PROCEDE ET DISPOSITIF GENERATEURS DE MOUSSE

(30) Priorität: 09.08.1991 DE 4126397
(43) Veröffentlichungstag der Anmeldung: 25.05.1994
(73) Patentinhaber: CRC CHEMICAL RESEARCH COMPANY LTD., Castleblayney (IE)
(72) Erfinder: KLEEN, Eugen, D-46514 Schermbeck-Gahlen (DE); MÜLLER, Claus-Michael, D-4300 Essen (DE)
(74) Vertreter: Hosbach, Hans Ulrich
(86) Internationale Anmeldenummer: EP9201778
(87) Internationale Veröffentlichungsnummer: WO9302783

(56) Entgegenhaltungen:
- EP-A- 0 288 106
- SU-A- 1 493 297

## Beschreibung

Die Erfindung betrifft ein Verfahren zur Schaumerzeugung nach dem Oberbegriff des Patentanspruchs 1. Ferner betrifft die Erfindung einen Schaumgenerator nach dem Oberbegriff des Patentanspruchs 11.

Bisher wird Schaum hauptsächlich durch mechanisches Aufmischen erzeugt. Aus der DE-C-36 31 221 C1 ist es bekannt, aus Schaumbildner und Wasser einen Schaum zu bilden und diesem Schaum nacheinander ein hydraulisches Bindemittel, z.B. Zement, und einen staubförmigen mineralischen Stoff beizumischen. Wenn die Schaummasse zum Zeitpunkt des Zumischens der Hauptkomponente, nämlich des staubförmigen mineralischen Feststoffs, mit dem Bindemittel beladen ist, besteht die Gefahr einer Lunkerbildung. Der entstehende Schaum kann daher nicht mehr ohne weiteres weiterverarbeitet werden. Es ist ferner bekannt, jeweils einen fertigen Schaum mit verschiedenen staubförmigen mineralischen Stoffen innig zu vermischen und beide Schaummischungen danach zusammenzuführen und wiederum mechanisch zu einem geschäumten Baustoff zu vermischen (EP-OS 0299482). Mit diesen bekannten mechanischen Schaumerzeugungsverfahren können nur solche Werkstoffe aufgeschäumt werden, die relativ lange Topf- und Verarbeitungszeiten (> 30 Sekunden) besitzen. Hierzu gehören Verfüllungsschäume im Bergbau sowie langsam erhärtende Reparatur- und Dämmörtel.

Es gibt auch Verfahren zur Schaumerzeugung, bei denen der Schaum durch chemische Reaktion erzeugt wird. Hierzu gehört die Polyurethanschaumerzeugung, bei der das aufschäumbare Medium mit Wasser oder Luftfeuchtigkeit reagiert. Schließlich gibt es auch Schaumerzeugungsverfahren durch Treibgas, bei denen dem aufzuschäumenden Medium Treibgas zunächst in flüssiger Form beigemischt wird und der Schaum später durch Übergang des Treibgases von der flüssigen in die gasförmige Phase entsteht.

Ein Verfahren und eine Vorrichtung der eingangs genannten Art sind aus der EP-A-0 288 106 bekannt. Dort wird aufschäumbarer Zementschlamm innerhalb der Mischkammer umgelenkt, während gleichzeitig Stickstoff in den Umlenkbereich eingedüst wird. Anschließend wird der Zementschaum in Erdbohrungen eingeleitet. Es wurde gefunden, daß diese Technik verbesserungsbedürftig ist, insbesondere im Hinblick auf die Verarbeitung unterschiedlicher Materialien.

Der Erfindung liegt die Aufgabe zugrunde, ein Verfahren und einen Generator zur Schaumerzeugung zur Verfügung zu stellen, die einen bisher unerreichten Anwendungsbereich unter Einschluß von Bindemitteln mit äußerst kurzen Topf- und Verarbeitungszeiten haben und mit geringem Aufwand den unterschiedlichen Anwendungen anpaßbar sind.

Zur Lösung dieser Aufgabe weist das erfindungsgemäße Verfahren die Merkmale im kennzeichnenden Teil des Patentanspruchs 1 auf, während sich der erfindungsgemäße Schaumgenerator durch die kennzeichnenden Merkmale des Patentanspruchs 11 auszeichnet.

Ein wesentlicher Vorteil der Erfindung gegenüber herkömmlichen Schaumerzeugungsverfahren und -vorrichtungen besteht darin, daß jedes Gas, also auch Luft, CO₂, Wasserdampf oder auch ein beliebiges anderes Gasgemisch bei der Schaumerzeugung verwendet werden kann. Entsprechendes gilt auch für das aufschäumbare flüssige oder pastöse Medium. Die pneumatische Schaumerzeugung in der Mischkammer findet kontinuierlich und dank der laminaren Strömung und der einheitlichen Porösität der Trennwand derart gleichmäßig und rasch statt, daß der fertige Schaum bereits unmittelbar nach der Zusammenführung der flüssigen bzw. pastösen aufschäumbaren Komponente mit dem die Aufschäumung bewirkenden gasförmigen Medium entsteht. Daher läßt sich die Erfindung auch auf solche aufschäumbaren Medien anwenden, die bisher wegen ihrer kurzen Topf- und Verarbeitungszeiten (< 30 Sekunden) für die Schaumerzeugung ungeeignet erschienen.

Die Einführung des gasförmigen Mediums durch eine mit zahlreichen Mikroporen durchsetzte Trennwand in die Mischkammer sorgt in vorteilhafter Weise für eine optimale Verteilung der Schaumbläschen im Schaum. Bei gleichmäßiger Größe der Mikroporen in der Trennwand ist auch eine gleichmäßige Luftbläschen- bzw. -porengröße im fertigen Schaum gewährleistet. Diese gleichmäßige Luftporengröße läßt sich gemäß einer Weiterbildung der Erfindung voreinstellen durch geeignete Wahl der Mikroporen in der vorzugsweise tubus- oder rohrförmig ausgebildeten porösen Trennwand. Im Betrieb selbst läßt sich in vorteilhafter Weiterbildung der Erfindung die Luftbläschengröße im fertigen Schaum (außerhalb des Schaumgenerators) dadurch steuern, daß die relativen Mengenströme der aufschäumbaren und gasförmigen Medien gesteuert werden. Durch Änderung des Verhältnisses der in die Mischkammer pro Zeiteinheit eingeführten Gas- und Flüssigkeitsmengen läßt sich der Porenanteil und damit die Dichte (Gewicht) des fertigen Schaums variieren.

Die Verarbeitungsmöglichkeit selbst rasch abbindender Stoffe eröffnet dem erfindungsgemäßen Schaumerzeugungsverfahren und dem zugehörigen Schaumgenerator neue und wichtige Anwendungsgebiete. Es lassen sich vor allem auf dem Bausektor im Bereich von Leichtmörteln, Leichtputzen, Schaumbetonen und Reaktionsharzen in situ Formteile herstellen, die aufgrund ihres geringen Gewichts erhebliche Einsparungen erwarten lassen. Die Erfindung läßt sich aber auch uneingeschränkt zu Verfüllungsaufgaben im Bergbau sowie zu Spezialverschäumungsaufgaben, wie der Applikation von Reparaturmörteln, Wärmedämmörteln, Schallschutzmörteln, Baustoffen mit schallhemmenden Eigenschaften, Putzen, Maschinenputzen, Dämmörteln und Anhydritbindemitteln und für schließlich Säureschutzaufgaben einsetzen. Geeignet ist die Erfindung aber auch zu Löschzwecken, wobei Luft oder Kohlendioxid in der Mischkammer in einen tensidhaltigen kontinuierlichen Wasserstrom eingeführt wird.

Um zur gleichmäßigen Aufschäumung und Verteilung der Luftporen im Schaum während der Schaumerzeugung die im wesentlichen laminare Strömung des aufschäumbaren Mediums in der Mischkammer aufrechtzuerhalten, hat der Schaumgenerator ein im wesentlichen zylindrisches Gehäuses, in welchem Misch- und Gaseinlaßkammern konzentrisch angeordnet sind. Die die Mischkammer begrenzende poröse Trennwand ist vorzugsweise ein tubus- oder rohrförmiges Kunststofformteil, in welchem radiale Durchgangswege freigebende Mikroporen bei einer Porengröße zwischen 5 und 500 µm, insbesondere zwischen 10 und 250 µm ausgebildet sind.

Neben der besonders einfach aufgebauten zylindrischen Bauform des Gehäuses mit konzentrischer Anordnung der Misch- und Gaseinlaßkammern sind aber auch andere Gehäusebauformen möglich, so beispielsweise Mehrkammersysteme mit mehreren parallelen Mischkammern, die eine gemeinsame Gaseintrittskammer durchdringen und jeweils durch geeignete poröse Kunststofformteile als Trennwände begrenzt sind; eine einfache etwas weniger wirksame Bauform ist die Nebeneinanderanordnung von Misch- und Gaseinlaßkammern mit einer im wesentlichen ebenen porösen Trennwand.

Zweckmäßige Weiterbildungen und vorteilhafte Ausgestaltungen der Erfindung sind in den Unteransprüchen gekennzeichnet.

Im folgenden wird die Erfindung anhand eines in der Zeichnung schematisch dargestellten Ausführungsbeispiels näher erläutert. Es zeigt:

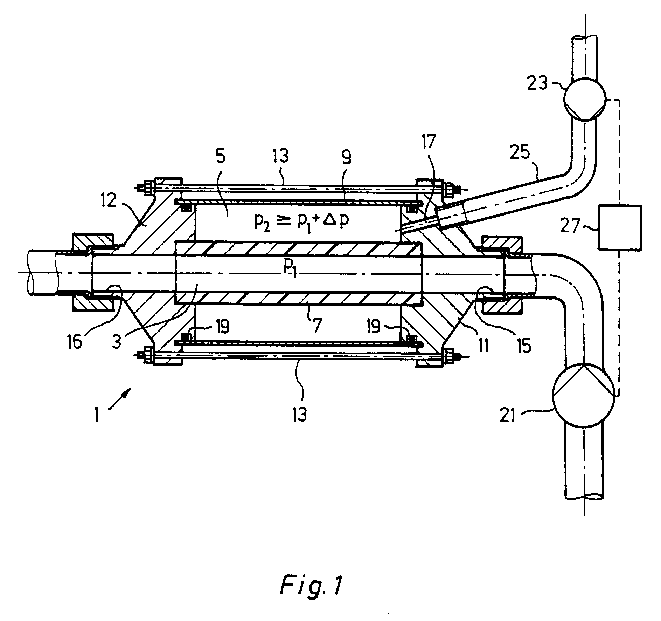

- Fig. 1: die wesentlichen Komponenten - teilweise geschnitten und teilweise in Form eines Blockschaltbildes - eines Ausführungsbeispiels des erfindungsgemäßen Schaumgenerators.

In Fig. 1 sind die wesentlichen Komponenten des neuen Schaumgenerators dargestellt. Kern des Schaumgenerators ist ein Aufschäumkopf mit einem Gehäuse 1, in welchem eine zylindrische Mischkammer 3 und eine zur Mischkammer 3 konzentrisch angeordnete Gaseinlaßkammer 5 angeordnet sind. Die Mischkammer und die Gaseinlaßkammer sind durch eine tubus- oder rohrartige Trennwand 7 getrennt. Die Trennwand 7 besteht aus einem rohrförmigen Kunststofformteil, das zumindest in Radialrichtung mit Mikroporen versehen ist. Die Porengröße der Trennwand 7 richtet sich nach dem Anwendungsfall; es gibt für andere Zwecke tubus- oder rohrförmige Kunststofformteile der bei der Erfindung verwendbaren Art mit Porengrößen zwischen etwa 5 und 250 µm. Die Größe dar Poren ist jedoch bei der Erfindung unkritisch. Günstig ist eine gleichmäßige Porengröße und eine gleichmäßige Verteilung der Poren über die Länge und den Umfang des tubus- oder rohrförmigen Kunststofformteils 7.

Die Gaseinlaßkammer 5 ist außen von einer zylindrischen Umfangswand 9 begrenzt. Die die Kammern 3 und 5 begrenzenden Wände 7 und 9 sind zwischen zwei Flanschen 11 und 12 lösbar gehaltert. Die Flansche 11 und 12 können nach Lösen von Haltebolzen 13 axial auseinandergezogen werden, wodurch die in geeigneten Nuten der beiden Flansche einfassenden zylindrischen Wände 7 und 9 ebenso wie die Misch- und Gaseinlaßkammern 3 und 5 freigelegt werden können. Die beiden Flansche 11 und 12 sind mit axialen Durchgangsstutzen 15 und 16 versehen, deren Öffnungsquerschnitte demjenigen der Mischkammer 3 genau angepaßt sind.

Der eine Flansch 11 hat bei dem beschriebenen Ausführungsbeispiel einen Einlaß 17, durch den das gasförmige Medium, insbesondere Luft in die Gaseinlaßkammer 5 eingeleitet wird. In beiden Flanschen 11 und 12 sind Ringnuten 19 zur Aufnahme von als Dichtelemente dienenden O-Ringen ausgebildet. Mit Hilfe der Ringdichtungen soll der im wesentlichen gasdichte Abschluß des Gehäuses 1 zwischen Gaseinlaßkammer 5 und der Außenatmosphäre hergestellt werden. Dieser Gasabschluß ist aber unkritisch, da die zur Schaumerzeugung erforderliche Gaszufuhr kontinuierlich über den Einlaß 17 in die Gaseinlaßkammer erfolgt, wobei etwaige Leckströme problemlos ausgeglichen werden können.

Ein geeignetes aufschäumbares, vorzugsweise flüssiges, ggf. aber auch pastöses Medium wird mit Hilfe der Pumpe 21 in den Einlaßstutzen 15 gedrückt. Gleichzeitig wird ein zum Aufschäumen benötigtes Gas, beispielsweise Luft, mit Hilfe eines Kompressors 23 über die Leitung 25 in den Gaseinlaß 17 gedrückt. Über einen Regler 27, dessen Meßwerte eine in der Zeichnung nicht dargestellte geeignete Meßanordnung liefert, werden die Leistungen der Pumpe 21 und des Kompressors 23 derart eingestellt, daß in der Mischkammer 3 ein Druck p₁ herrscht, der mindestens um den Differenzdruck Δp niedriger ist als der Druck p₂ in der die Mischkammer umgebenden Gaseinlaßkammer 5. Aufgrund dieses Druckgefälles Δp ist ein Medienaustausch grundsätzlich nur von der Gaseinlaßkammer 5 aus in Richtung der Mischkammer 3 möglich. Ein Eindringen des zumeist flüssigen aufschäumbaren Mediums aus der Mischkammer 3 in Richtung der Gaseinlaßkammer 5 hätte nämlich den ungünstigen Effekt, daß das aufschäumbare Medium die Mikroporen in der rohrförmigen Trennwand 3 mehr oder weniger stark schließt und dadurch die Funktion des Schaumgenerators beeinträchtigt.

Bei Einhaltung des vorgegebenen Druckgradienten Δp können die Fördermengen der Fördervorrichtungen 21 und 23 derart relativ zueinander variiert werden, daß sich die Luftbläschengröße nach Auswurf des in der Mischkammer 3 gebildeten Schaums steuern läßt. Damit kann auch die Dichte (das Gewicht) des geschäumten Fertigprodukts varriiert werden.

Die Umfangswand 9 besteht vorzugsweise aus einem durchsichtigen Kunststoff. Eine durchsichtige Umfangswand 9 hat den Vorteil, daß der Zustand der porösen Trennwand 7 laufend kontrolliert und die Trennwand ggf. frühzeitig ausgewechselt werden kann, um einem übermäßigen Druckabfall an der Trennwand 7 in Folge Ablagerungen in den Mikroporen vorzubeugen.

Wie aus dem schematischen Ausführungsbeispiel gemäß Fig. 1 leicht zu erkennen ist, ist das Gehäuse 1 (Generator-Aufschäumkopf) problemlos in jeder Größe herstellbar. Die Generatorleistung kann demgemäß dem jeweiligen Anwendungsfall angepaßt werden. Auch die relative Kammergrößen sowie die Ein- und Austrittsquerschnitte der Flüssigkeit und der Luft sind ohne beachtliche Einflüsse auf die Herstellungskosten oder die Betriebskosten. Das Gehäuse 1 selbst ist eine starre Baueinheit, die bei Anbringung geeigneter Handgriffe oder auch in der aus der Zeichnung ersichtlichen Form durch Anfassen am Gehäuse selbst leicht zu manipulieren ist. Die Verbindungsleitungen zwischen den Fördervorrichtungen 21 und 23 und dem Gehäuse 1 können flexibel sein und dadurch eine behinderungsfreie Bewegung des Aufschäumkopfs (Gehäuse mit Auslaß) ermöglichen.

## Patentansprüche

1. Verfahren zur Schaumerzeugung, bei dem ein aufschäumbares flüssiges oder pastöses Medium in eine Mischkammer (3) gefördert, an einer porösen Mischkammer-Trennwand (7) vorbeigeführt, mit einem in gleichmäßiger Verteilung durch die poröse Trennwand (7) eingeleiteten gasförmigen Medium gemischt und nach Austritt aus der Mischkammer (3) unter Schaumbildung entspannt wird, wobei ein Differenzdruck zwischen den beiden Seiten der porösen Trennwand (7) aufrechterhalten wird, bei dem der Gasübertritt in die Mischkammer (3) gewährleistet und ein Eindringen des aufschäumbaren Mediums in die Poren der Trennwand verhindert wird,
**dadurch gekennzeichnet,**
daß während der Schaumerzeugung eine im wesentlichen laminare Strömung des aufschäumbaren Mediums in der Mischkammer (3) aufrechterhalten wird.

2. Verfahren nach Anspruch 1, dadurch gekennzeichnet, daß der Strom des aufschäumbaren Mediums im wesentlichen axial durch die Mischkammer (3) geführt wird und daß das gasförmige Medium etwa quer dazu in die Mischkammer (3) eingeleitet wird.

3. Verfahren nach einem der Ansprüche 1 bis 2, dadurch gekennzeichnet, daß die Gasbläschengröße im Schaum durch Variation der relativen Mengenströme der aufschäumbaren und gasförmigen Medien gesteuert wird.

4. Verfahren nach einem der Ansprüche 1 bis 3, dadurch gekennzeichnet, daß die Gasbläschengröße im Schaum durch Auswahl der Größe der Mikroporen in der Mischkammer-Trennwand (7) voreingestellt wird.

5. Verfahren nach einem der Ansprüche 1 bis 4, dadurch gekennzeichnet, daß als gasförmiges Medium Luft, CO₂ oder Wasserdampf verwendet wird.

6. Verfahren nach einem der Ansprüche 1 bis 5, dadurch gekennzeichnet, daß das aufschäumbare Medium wenigstens einen mineralisch abbindenden erhärtenden Stoff enthält.

7. Verfahren nach einem der Ansprüche 1 bis 5, dadurch gekennzeichnet, daß das aufschäumbare Medium wenigstens einen organisch abbindenden Stoff enthält.

8. Verfahren nach einem der Ansprüche 1 bis 5, dadurch gekennzeichnet, daß das aufschäumbare Medium Wasser und ein Tensid enthält.

9. Verfahren nach Anspruch 6, dadurch gekennzeichnet, daß einer Anmachflüssigkeit, enthaltend Zementleim, -mörtel, -beton, Anhydritbindemittel, Kalkmörtel, Magnesitbindemittel und/oder mineralisch erhärtende Stoffe, eine oberflächenaktive Substanz zugegeben wird, bevor die Anmachflüssigkeit als aufschäumbares Medium in die Mischkammer (3) eingeführt wird.

10. Verfahren nach Anspruch 6 oder 9, dadurch gekennzeichnet, daß ein Leichtmörtel oder Dämmörtel in der Mischkammer (3) mit dem Gas gemischt wird.

11. Schaumgenerator zur Erzeugung von Schaum aus einem aufschäumbaren flüssigen oder pastösen Medium und einem gasförmigen Medium mit einer Mischkammer (3) und einer selektiv betätigbaren Fördervorrichtung (21, 23) zum Transport der Medien durch die Mischkammer, wobei neben der Mischkammer (3) eine Gaseinlaßkammer (5) vorgesehen ist und zwischen Mischkammer und Gaseinlaßkammer eine poröse Trennwand (7) mit im wesentlichen einheitlicher Porengröße angeordnet ist,
**dadurch gekennzeichnet,**
daß ein Differenzdruckgeber (27) vorgesehen ist, der so ausgebildet und angeordnet ist, daß er bei der Schaumerzeugung mindestens ein solches Druckgefälle (Δp) zwischen Gaseinlaßkammer (5) und Mischkammer (3) aufrechterhält, welches den Durchtritt des Gases durch die Poren der Trennwand (7) in die Mischkammer (3) gewährleistet, und
daß zur im wesentlichen turbulenzfreien Führung des schaumbildenden Mediums die Mischkammer (3) von der porösen Trennwand (7) rohrartig umschlossen ist, wobei die Ein- und Auslässe (15, 16) des schaumbildenden Mediums axial an entgegengesetzten Stirnseiten der Mischkammer angeordnet sind und wobei der Strömungsquerschnitt vom Einlaß (15) durch die Mischkammer (3) zum Auslaß (16) im wesentlichen konstant ist.

12. Schaumgenerator nach Anspruch, dadurch gekennzeichnet, daß die Misch- und Gaseinlaßkammern in einem abgeschlossenen Gehäuse (1) angeordnete konzentrische Kammern (3, 5) sind.

13. Schaumgenerator nach Anspruch 11 oder 12, dadurch gekennzeichnet, daß als poröse Trennwand (7) ein tubus- oder rohrförmiges Kunststofformteil vorgesehen ist, das mit etwa radial verlaufenden Mikroporen bei einer Porengröße zwischen 5 und 500 µm versehen ist.

14. Schaumgenerator nach Anspruch 12 oder 13, dadurch gekennzeichnet, daß das Gehäuse (1) eine die Gaseinlaßkammer (5) konzentrisch umschließende Umfangswand (9) und zwei Flansche (11, 12) aufweist, zwischen denen die poröse Trennwand (7) und die Umfangswand (9) lösbar gehaltert sind, und daß beide Flansche mit axialen Durchgangsstutzen (15, 16) versehen sind, deren Öffnungsquerschnitte demjenigen der Mischkammer (3) angepaßt sind.

15. Schaumgenerator nach Anspruch 14, dadurch gekennzeichnet, daß die Umfangswand (9) aus einem transparenten, klarsichtigen Material besteht.

16. Schaumgenerator nach einem der Ansprüche 11 bis 15, dadurch gekennzeichnet, daß Mittel (23, 21) zum Steuern der der Gaseinlaßkammer (5) zugeführten Gasmenge und/oder der in die Mischkammer 83) geförderten Menge des aufschäumbaren Mediums vorgesehen sind.

17. Schaumgenerator nach Anspruch 16, dadurch gekennzeichnet, daß die Fördervorrichtung eine in die Mischkammer (3) fördernde Pumpe (21) mit steuerbarer Förderleistung und einen der Gaseinlaßkammer (5) vorgeschalteten Kompressor (23) mit steuerbarer Kompressorleistung aufweist.

## Claims

1. Method of generating foam in which a foamable liquid or pasty medium is conveyed into a mixing chamber (3), conducted past a porous mixing chamber partition wall (7), mixed with a gaseous medium, which is introduced uniformly distributed through the porous partition wall (7) and is depressurised after discharge from the mixing chamber (3) to form foam, a differential pressure being maintained between the two sides of the porous partition wall (7) at which the transfer of gas into the mixing chamber (3) is ensured and penetration of the foamable medium into the pores of the partition wall is prevented, characterised in that a substantially laminar flow of the foamable medium is maintained in the mixing chamber (3) during the foam generation.

2. Method as claimed in claim 1, characterised in that the flow of the foamable medium is conducted substantially axially through the mixing chamber (3) and that the gaseous medium is introduced into the mixing chamber (3) approximately transversely thereto.

3. Method as claimed in one of claims 1 to 2, characterised in that the gas bubble size in the foam is controlled by variation of the relative flow rates of the foamable and gaseous media.

4. Method as claimed in one of claims 1 to 3, characterised in that the gas bubble size in the foam is preset by selection of the size of the micropores in the mixing chamber partition wall (7).

5. Method as claimed in one of claims 1 to 4, characterised in that air, CO₂ or water vapour is used as the gaseous medium.

6. Method as claimed in one of claims 1 to 5, characterised in that the foamable medium includes at least one mineral setting, hardening material.

7. Method as claimed in one of claims 1 to 5, characterised in that the foamable medium contains at least one organic setting material.

8. Method as claimed in one of claims 1 to 5, characterised in that the foamable medium contains water and a tenside.

9. Method as claimed in claim 6, characterised in that a makeup liquid containing cement adhesive, cement mortar, cement concrete, anhydrite bonding agent, lime mortar, magnesite bonding agent and/or mineral setting substances and a surface active substance is added before the makeup liquid is introduced as the foamable medium into the mixing chamber (3).

10. Method as claimed in claim 6 or 9, characterised in that a light mortar or insulating mortar is mixed with the gas in the mixing chamber (3).

11. Foam generator for producing foam from a foamable liquid pasty medium and a gaseous medium including a mixing chamber (3) and a selectively actuable conveying device (21,23) for transporting the media through the mixing chamber, a gas inlet chamber (5) being provided next to the mixing chamber (3) and a porous partition wall (7) with a substantially uniform pore size being arranged between the mixing chamber and the gas inlet chamber, characterised in that a differential pressure sensor (27) is provided which is so constructed and arranged that, during foam generation, it maintains a pressure gradient (Δp) between the gas inner chamber (5) and the mixing chamber (3) which ensures the passage of the gas through the pores in the partition wall (7) into the mixing chamber (3), and that the mixing chamber (3) is surrounded by the tubular porous partition wall (7) in order to conduct the foam-forming medium in a substantially turbulence-free manner, the inlet and outlet (15,16) of the foam-forming medium being arranged axially at opposed ends of the mixing chamber and the flow cross-section being substantially constant from the inlet (15) through the mixing chamber (3) to the outlet (16).

12. Foam generator as claimed in claim 11, characterised in that the mixing and gas inlet chambers are concentric chambers (3,5) arranged within a sealed housing (1).

13. Foam generator as claimed in claim 11 or 12, characterised in that a tube- or pipe-shaped moulded plastics member is provided as the porous partition wall (7) which is provided {b^EKall (7) and the peripheral wall (9) are releasably mounted and that the two flanges are provided with axial through sockets (15,16), the opening cross-sections of which are matched to that of the mixing chamber (3).

14. Foam generator as claimed in claim 12 or 13, characterised in that the housing (1) has a peripheral wall (9), which concentrically surrounds the gas inlet chamber (5), and two flanges (11,12), between which the porous partition wall (7) and the peripheral wall (9) are releasably mounted and that the two flanges are provided with axial passages (15,16), the opening cross-sections of which are matched to that of the mixing chamber (3).

15. Foam generator as claimed in claim 14, characterised in that the peripheral wall (9) comprises a clear transparent material.

16. Foam generator as claimed in one of claims 11 to 15, characterised in that means (23,21) are provided for controlling the amount of gas supplied to the gas inner chamber (5) and/or the amount of the foamable medium conveyed into the mixing chamber (3).

17. Foam generator as claimed in claim 16, characterised in that the conveying device has a pump (21), discharging into the mixing chamber (3), with a controllable delivery output and a compressor (23), positioned upstream of the gas inlet chamber (5), with a controllable compressor output.

## Revendications

1. Procédé de production de produit alvéolaire, dans lequel on envoie une matière expansible liquide ou pâteuse dans une chambre de mélange (3), on la fait passer devant une cloison poreuse (7) de cette chambre de mélange, on la mélange avec une matière gazeuse introduite, uniformément répartie, à travers la cloison poreuse (7) et, après sa sortie de la chambre de mélange (3), on la détend en formant un produit alvéolaire, en maintenant entre les deux côtés de la cloison poreuse (7) une différence de pression qui assure l'entrée du gaz dans la chambre de mélange (3) et empêche la pénétration de la matière expansible dans les pores de la cloison,
caractérisé par le fait
que pendant la production de produit alvéolaire, on maintient un écoulement sensiblement laminaire de la matière expansible dans la chambre de mélange (3).

2. Procédé selon la revendication 1, caractérisé par le fait qu'on fait passer le courant de matière expansible sensiblement axialement dans la chambre de mélange (3) et qu'on introduit la matière gazeuse dans la chambre de mélange (3) à peu près perpendiculairement à cette direction.

3. Procédé selon l'une des revendications 1 et 2, caractérisé par le fait qu'on commande la grosseur des bulles de gaz dans le produit alvéolaire en faisant varier les débits relatifs des matières expansible et gazeuse.

4. Procédé selon l'une des revendications 1 à 3, caractérisé par le fait qu'on fixe la grosseur des bulles de gaz dans le produit alvéolaire en choisissant la grosseur des micropores de la cloison (7) de la chambre de mélange.

5. Procédé selon l'une des revendications 1 à 4, caractérisé par le fait qu'on utilise comme matière gazeuse de l'air, du CO₂ ou de la vapeur d'eau.

6. Procédé selon l'une des revendications 1 à 5, caractérisé par le fait que la matière expansible contient au moins une substance durcissable à prise minérale.

7. Procédé selon l'une des revendications 1 à 5, caractérisé par le fait que la matière expansible contient au moins une substance à prise organique.

8. Procédé selon l'une des revendications 1 à 5, caractérisé par le fait que la matière expansible contient de l'eau et un agent tensioactif.

9. Procédé selon la revendication 6, caractérisé par le fait qu'on ajoute une substance tensioactive à un liquide de gâchage, contenant de la colle de ciment, du mortier de ciment, de béton de ciment, du liant d'anhydrite, du mortier de chaux, du liant de magnésite et/ou des substances à durcissement minéral, avant d'introduire ce liquide de gâchage comme matière expansible dans la chambre de mélange (3).

10. Procédé selon l'une des revendications 6 et 9, caractérisé par le fait qu'on mélange un mortier léger ou un mortier isolant au gaz dans la chambre de mélange (3).

11. Générateur de produit alvéolaire pour la production de produit alvéolaire à partir d'une matière expansible liquide ou pâteuse et d'une matière gazeuse, comportant une chambre de mélange (3) et un dispositif transporteur actionnable sélectivement (21, 23) pour le transport des matières à travers la chambre de mélange, une chambre d'admission de gaz (5) étant prévue près de la chambre de mélange (3) et, une cloison poreuse (7) à grosseur de pores sensiblement uniforme, étant placée entre la chambre de mélange et cette chambre d'admission de gaz,
caractérisé par le fait
qu'il est prévu un capteur de différence de pression (27) qui est fait et placé de façon à maintenir pendant la production de produit alvéolaire au moins une chute de pression (Δp) entre la chambre d'admission de gaz (5) et la chambre de mélange (3) qui assure le passage du gaz à travers les pores de la cloison (7) pour son entrée dans la chambre de mélange (3), et
que pour une conduite pratiquement sans turbulence de la matière génératrice de produit alvéolaire, la chambre de mélange (3) est entourée à la manière d'un tube par la cloison poreuse (7), l'entrée (15) et la sortie (16) de la matière génératrice de produit alvéolaire étant placées axialement sur des côtés frontaux opposés de la chambre de mélange et la section d'écoulement étant sensiblement constante de l'entrée (15) à la sortie (16) en passant par la chambre de mélange (3).

12. Générateur de produit alvéolaire selon la revendication 11, caractérisé par le fait que les chambres de mélange et d'admission de gaz sont des chambres concentriques (3, 5) situées dans un corps fermé (1).

13. Générateur de produit alvéolaire selon l'une des revendications 11 et 12, caractérisé par le fait que comme paroi poreuse (7) est prévue une pièce moulée tubulaire en matière plastique qui est pourvue de micropores s'étendant à peu près radialement et de grosseur comprise entre 5 et 500 µm.

14. Générateur de produit alvéolaire selon l'une des revendications 12 et 13, caractérisé par le fait que le corps (1) présente une paroi périphérique (9) entourant concentriquement la chambre d'admission de gaz (5) et deux brides (11, 12) entre lesquelles la cloison poreuse (7) et la paroi périphérique (9) sont montées de manière démontable, et que les deux brides sont pourvues de tubulures axiales de passage (15, 16) dont la section de passage est adaptée à celle de la chambre de mélange (3).

15. Générateur de produit alvéolaire selon la revendication 14, caractérisé par le fait que la paroi périphérique (9) est constituée d'une matière transparente.

16. Générateur de produit alvéolaire selon l'une des revendications 11 à 15, caractérisé par le fait qu'il est prévu des moyens (23, 21) de commande de la quantité de gaz envoyée à la chambre d'admission de gaz (5) et/ou de la quantité de matière expansible envoyée dans la chambre de mélange (3).

17. Générateur de produit alvéolaire selon la revendication 16, caractérisé par le fait que le dispositif transporteur comporte une pompe (21) à débit pouvant être commandé qui refoule dans la chambre de mélange (3) et un compresseur (23) à débit pouvant être commandé qui est monté en amont de la chambre d'admission de gaz (5).
